# EUROPÄISCHE PATENTSCHRIFT

(11) **EP 0 928 303 B1**
(45) Veröffentlichungstag und Bekanntmachung des Hinweises auf die Patenterteilung: **28.06.2000**
(21) Anmeldenummer: 97942014.8
(22) Anmeldetag: 10.09.1997
(51) Int. Cl.: C08G 18/42, C09D 175/06

(54) **VERFAHREN ZUR HERSTELLUNG EINER WÄSSRIGEN DISPERSION EINES POLYACRYLATMODIFIZIERTEN POLYURETHAN-ALKYDHARZES UND DIE VERWENDUNG EINER SOLCHEN DISPERSION**
PROCESS FOR PREPARING AN AQUEOUS DISPERSION OF A POLYACRYLATE-MODIFIED POLYURETHANE-ALKYD RESIN AND THE USE OF SUCH A DISPERSION
PROCEDE DE FABRICATION D'UNE DISPERSION AQUEUSE D'UNE RESINE ALKYDE-POLYURETHANNE MODIFIEE AU POLYACRYLATE ET UTILISATION D'UNE TELLE DISPERSION

(30) Priorität: 25.09.1996 DE 19639325
(43) Veröffentlichungstag der Anmeldung: 14.07.1999
(73) Patentinhaber: BASF Coatings AG, 48165 Münster (DE)
(72) Erfinder: WILKE, Guido, D-48153 Münster (DE); POTH, Ulrich, D-48163 Münster (DE); SEIDEMANN, Rolf, D-48136 Münster (DE); KADAMBANDE, Vijay, D-48165 Münster (DE)
(74) Vertreter: Fitzner, Uwe, Dr.
(86) Internationale Anmeldenummer: EP9704951
(87) Internationale Veröffentlichungsnummer: WO9813404

(56) Entgegenhaltungen:
- EP-A- 0 267 562
- EP-A- 0 437 743
- EP-A- 0 722 963
- WO-A-97/10276
- DE-A- 4 226 243
- US-A- 4 133 786

## Beschreibung

### Gebiet der Erfindung

Die Erfindung betrifft ein Verfahren zur Herstellung einer wäßrigen Bindemitteldispersion BM, enthaltend ein polyacrylatmodifiziertes Polyurethan-Alkydharz mit einem Gemisch aus ungesättigten Fettsäuren als Monomerbausteine, sowie die Verwendung solcher Bindemitteldispersionen BM in Beschichtungsmitteln für vergilbungsarme alkoholbeständige hochglänzende Beschichtungen, insbesondere für Holz und Kunststoff.

### Stand der Technik

Wäßrige Alkydharz-Acrylat-Dispersionen zur Herstellung von lufttrocknenden Beschichtungen sind seit längerem bekannt und beispielsweise in US-PS 4,133,786 oder GB-A-1 117 126 beschrieben.

In DE-A-32 19 413 sind wäßrige Alkydharzemulsionen beschrieben, deren emulgierter Harzanteil aus einer Mischung aus einem acrylatmodifizierten lufttrocknenden Alkydharz mit Säuregruppen, die vor der Emulgierung in Wasser teilneutralisiert werden, und einem urethanmodifiziertem lufttrocknenden Alkydharz mit tertiären Aminogruppen besteht.

DE-A-32 19 471 umfaßt ebenfalls wäßrige Alkydharzemulsionen, deren emulgierter Harzanteil aus einer Mischung aus acrylatmodifiziertem luftrocknenden Alkydharz mit teilneutralisierten Säuregruppen und einem urethanmodifizierten lufttrocknenden Alkydharz mit tertiären Aminogruppen besteht, wobei das acrylatmodifizierte Alkydharz im Gegensatz zu dem in DE-A-32 19 413 eingesetzten zusätzlich Polyethylenglykol enthält.

In DE-A-33 15 690 wird ein Verfahren zur Herstellung von lufttrocknenden wäßrigen Emulsionen von urethanmodifizierten Alkydharzen und/oder Urethanölen beschrieben, wobei zunächst ein Pfropfcopolymerisat aus ungesättigtem Polyester und Acrylatmonomeren als Emulgator mit dem lufttrocknenden urethanmodifizierten Alkydharz gemischt werden und danach das solchermaßen erhaltene Gemisch in Wasser emulgiert wird.

In EP-A-0 267 562 wird ein Verfahren zur Herstellung von wasserverdünnbaren lufttrocknenden Lackbindemitteln auf der Basis von vinyl- und/oder (meth)acrylmodifizierten Alkydharzemulsionen beschrieben, wobei eine Mischung von Vinyl- und/oder (Meth)acrylmonomeren in Gegenwart einer wäßrigen Lösung oder Emulsion eines nach zumindest teilweiser Neutralisation wasserlöslichen Alkydharzes und/oder Urethanalkydharzes und/oder Epoxidharzesters, die einen Gehalt an Fettsäuren aufweisen und die mit Methacrylsäure und weiteren Monomeren auf einen Teil der ungesättigten Fettsäuren gepropft sind, in Gegenwart eines radikalischen Initiators bis zu einem Umsatz von mindestens 95% polymerisiert werden.

Von EP-A-0 305 795 wird ein Verfahren zur Herstellung von wäßrigen Pfropfcopolymerisatemulsionen umfaßt, bei dem in einem Schritt (a) ein Polymerisat durch Veresterung von ungesättigten Fettsäuren, Polyolen mit 3 bis 6 Hydroxylgruppen und gegebenenfalls Polyethylenglykol und anschließende Pfropfcopolymerisation von (Meth)acrylsäure und nicht-funktionellen vinylisch ungesättigten Monomeren auf die ungesättigten Fettsäuren hergestellt wird, welches in einem Schritt (b) nach Neutralisation der Carboxylgruppen der (Meth)acrylsäure mit Ammoniak und/oder organischen Aminen mit Wasser versetzt wird, und in dieser Lösung in einem Schritt (c) Vinyl- und/oder (Meth)acrylmonomere, die im wesentlichen außer der ethylenisch ungesättigten Doppelbindung keine weitere funktionelle Gruppe tragen, polymerisiert werden.

Die vorstehend angeführten Offenlegungsschriften beschreiben sämtlich Alkydharz-Acrylat-Dispersionen mit einem Kern-Schale-Aufbau, wobei der Kern aus einem hydrophoben Alkydharz-Segment und die auf den Kern gepfropfte Schale aus carboxylgruppenhaltigen, neutralisier- und damit hydrophilierbaren Acrylat-Segmenten besteht.Als Hauptvorteil dieses Bindemitteltyps wird die Lagerfähigkeit genannt.
Die Herstellung solcher Polymerisate ist recht kompliziert (vergl. insbesondere EP-A-0 267 562 und EP-A-0 305 795).

### Aufgabe und Lösung

Bei sogenannten "Do-it-yourself"-Malerlacken, die in der Hauptsache bei der Lackierung von Holz-, Kunststoff- oder Metallsubstraten eingesetzt werden besteht das Bedürfnis nach lösemittelarmen Einkomponentensystemen, die eine schnelle Aushärtung des Lacks bei Raumtemperatur gewährleisten. Darüber hinaus sollen mit solchen Malerlacken vergilbungsarme, witterungsstabile, kratzfeste und hochglänzende Beschichtungen realisiert werden, die zudem eine hohe Beständigkeit gegen Wasser und gegen Alkohol aufweisen.

Überraschenderweise wurde gefunden, daß Lacke, enthaltend Lackbindemittel auf Basis von polyacrylatmodifizierten Polyurethan-Alkydharzen, zu Lackfilmen mit den oben beschriebenen vorteilhaften Eigenschaften führen, wenn die Lacke wäßrige Bindemitteldispersionen BM enthalten, die nach folgendem mehrstufigen Verfahren hergestellt werden:
In einer ersten Stufe wird die Polyurethan-Alkydharzkomponente (A) hergestellt, aufgebaut aus:
   (a) 5 bis 50 Gew.-% eines Gemischs aus:
      (a1) 90 bis 30 Gew.-Teilen einer ungesättigten C6- bis C30-Fettsäure mit mindestens zwei nicht konjugierten Doppelbindungen,sowie
      (a2) 10 bis 70 Gew.-Teilen einer ungesättigten C6- bis C30-Fettsäure mit mindestens zwei konjugierten Doppelbindungen,
      als veresterte Polymerseitenketten der Polyurethan-Alkydharzkomponente (A),
      sowie
   (b) 95 bis 50 Gew-% Polyurethaneinheiten mit Monomerbausteinen mit anionischen Gruppen oder durch Neutralisation in anionische Gruppen überführbare Gruppen als Polymerhauptketten der Polyurethan-Alkydharzkomponente (A),
in einer zweiten Stufe des Verfahrens wird die Polyurethan-Alkydharzkomponente (A), gegebenenfalls unter Neutralisation, in eine wäßrige Dispersion oder Lösung überführt, wonach
in einer dritten Stufe zur Herstellung der Bindemitteldispersion BM, enthaltend das acrylatmodifizierte Polyurethan-Alkydharz (A'), in der gemäß der zweiten Stufe hergestellten Dispersion oder Lösung, enthaltend das Polyurethan-Alkydharz (A), mindestens ein ethylenisch ungesättigtes Monomeres (c), das im wesentlichen außer der Doppelbindung keine weitere reaktionsfähige funktionelle Gruppe aufweist, oder ein Gemisch aus solchen Monomeren (c) in Gegenwart eines Radikalbildners als Polymerisationsinitiator polymerisiert wird.

Die Polyurethan-Alkydharzkomponenten (A) weisen bevorzugt Säurezahlen zwischen 15 und 40 mg KOH/g, besonders bevorzugt zwischen 20 und 30 mg KOH/g, sowie bevorzugt Hydroxylzahlen zwischen 90 und 150 mg KOH/g, besonders bevorzugt zwischen 100 und 130 mg KOH/g auf. Der Gehalt an Urethangruppen in den Polyurethan-Alkydharzkomponenten (A) liegt vorzugsweise zwischen 5 und 15 Gew.-% bezogen auf (A), besonders vorzugsweise zwischen 5 und 10 Gew.-%.

Bevorzugt in der dritten Stufe der Herstellung der wäßrigen Bindemitteldispersion BM verwendete ethylenisch ungesättigte Monomere (c), die im wesentlichen keine weitere reaktionsfähigen funktionellen Gruppen tragen, sind insbesondere (Meth)acrylsäureester, Vinylaromaten sowie Vinylester.

Bevorzugt enthalten die wäßrigen Bindemitteldispersionen BM weniger als 2 Gew.-% an Lösemitteln, besonders bevorzugt weniger als 1 Gew.-%, bezogen auf die Bindemitteldispersion BM.

Weiterhin können die wäßrigen Bindemitteldispersionen BM zwischen 0 und 20 Gew.-%, vorzugsweise zwischen 0 und 10 Gew.-%, bezogen auf (A) zusätzliche Vernetzerkomponenten (B) enthalten, die vorzugsweise bei Raumtemperatur mit den überschüssigen Hydroxyl- und/oder Carboxylgruppen der Polyurethan-Alkydharzkomponente (A) reagieren können.

### Durchführung der Erfindung

### Die Stufe (I) des erfindungsgemäßen Verfahrens: die Herstellung des Polyurethan-Alkydharzes (A)

Das die Polymerseitenketten der Polyurethan-Alkydharzkomponente (A) aufbauende Gemisch (a) aus ungesättigten Fettsäuren (a1) mit mindestens zwei nicht-konjugierten Doppelbindungen und ungesättigten Fettsäuren (a2) mit mindestens zwei konjugierten Doppelbindungen ist in Anteilen von 5 bis 50 Gew.-%, berechnet als Triglycerid (Öllänge), vorzugsweise in Anteilen von 10 bis 45 Gew.-%, in der Polyurethan-Alkydharz-komponente (A) anwesend.
Die Komponenten (a1) und (a2) werden im allgemeinen als trocknende Fettsäuren bezeichnet und weisen vorzugsweise zwischen 6 und 30, besonders bevorzugt zwischen 12 und 24 Kohlenstoffatome pro Molekül auf.
Beispielhaft für die ungesättigten Fettsäuren (a1) mit mindestens zwei nicht-konjugierten Doppelbindungen seien genannt:Linolensäure sowie bevorzugt Linolsäure als C18-Fettsäuren.
Beispielhaft für die ungesättigten Fettsäuren (a2) mit mindestens zwei konjugierten Doppelbindungen, auch Konjuenfettsäuren genannt, sei vorzugsweise die konjugierte Linolsäure mit zwei in Konjugation stehenden Doppelbindungen am 9. und am 11.Kohlenstoffatom der C17-Alkylkette der C18-Fettsäure genannt.
Die Fettsäuren (al) und (a2) sind beispielsweise in natürlichen Ölen wie Leinöl, Sojaöl, Saffloröl, Baumwollsaatöl oder Ricinusöl, Sonnenblumenöl, Erdnußöl, Holzöl und Ricinenöl enthalten. Die daraus gewonnenen Fettsäuren sind Leinölfettsaure, Safflorölfettsäure, Tallölfettsaure, Baumwollsaatfettsäure, Erdnußölfettsäure, Holzölfettsäure, Ricinenfettsäure oder bevorzugt Sonnenblumenölfettsäure.

Die die Polymerhauptkette aufbauenden Polyurethaneinheiten (b) sind aus Polyesterpolyolen (b1) und Polyisocyanaten (b2) solchermaßen aufgebaut, daß der Gehalt an Urethangruppen in den Polyurethan-Alkydharzen vorzugsweise zwischen 5 und 15 Gew-% bezogen auf (A), besonders vorzugsweise zwischen 5 und 10 Gew.-% bezogen auf (A) liegt. Die Säurezahlen der Polyesterpolyole (b1) liegt vorzugsweise zwischen 1 und 10 mg KOH/g, besonders vorzugsweise zwischen 2 und 5 mg KOH/g, während die Hydroxylzahl der Polyesterpolyole (b1) vorzugsweise zwischen 100 und 250 mg KOH/g, besonders vorzugsweise zwischen 140 und 160 mg KOH/g liegt. Die zahlenmittleren Molekulargewichte Mn der Polyesterpolyole liegen zwischen 800 und 2.000 Dalton, vorzugsweise zwischen 1.000 und 1.500 Dalton.
Die Polyesterpolyole (b1) sind aus Alkoholbausteinen (b11) und Säurebausteinen (b12) aufgebaut.
Vorzugsweise werden als Alkoholbausteine (b11) aliphatische, cycloaliphatische und/oder araliphatische Alkohole mit 1 bis 6, vorzugsweise 1 bis 4 an nicht-aromatische Kohlenstoffatome gebundene Hydroxylgruppen verwendet. Beispielhaft für (b11) seien genannt: Ethylenglykol, Propandiol-1,2 und -1,3, Butandiol-1,2, -1,3 und 1,4, 2-Ethylpropandiol-1,3, 2-Methylpropandiol, 2-Butyl-2-ethylpropandiol, 2-Ethylhexandiol-1,3, 1,3-Neopentylglykol, 2,2-Dimethylpentandiol-1,3, Hexandiol-1,6, Cyclohexandiol-1,2 und -1,4, 1,2- und 1,4-Bis(hydroxymethyl)cyclohexan, Bis(4-Hydroxycyclohexyl)methan, Adipinsäure-bis-(ethylenglykolester), Etheralkohole wie Di- und Triethylenglykol, Dipropylenglykol, perhydrierte Bisphenole, Butantriol-1,2,4, Hexantriol-1,2,6, Trimethylolethan, Trimethylolpropan, Trimethylolhexan, Glycerin, Pentaerythrit, Dipentaerythrit, Mannit und Sorbit, sowie kettenabbrechende Monoalkohole mit 1 bis 8 Kohlenstoffatomen wie Propanol, Butanol, Cyclohexanol, Benzylalkohol und Hydroxypivalinsäure. Bevorzugt eingesetzte Alkohole (b11) sind: Glycerin, Trimethylolpropan, Neopentylglykol und Pentaerythrit.

Um wasserdispergierbare Polyurethan-Alkydharzkomponenten (A) zu erhalten, werden als Monomerbausteine (b11) zumindest teilweise Polyole mit anionischen Gruppen oder in anionische Gruppen überführbare Gruppen, wie beispielsweise Carboxylgruppen eingesetzt. Bevorzugt werden hierfür Alkansäuren mit ein bis zwei Hydroxylsubstituenten eingesetzt. Diese Polyole haben im allgemeinen 1 bis 3, vorzugsweise eine Carboxylgruppe im Molekül, sowie vorzugsweise 3 bis 15 Kohlenstoffatomen pro Molekül. Beispiele für solche verbindungen sind: Hydroxypivalinsäure, Dihydroxypropionsäure, Dihydroxybernsteinsäure, Dihydroxybenzoesäure und/oder Dihydroxycyclohexan-Monocarbonsäure. Besonders bevorzugt sind als Monomerbaustein die 2,2-Dimethylolalkansäuren mit Alkylresten von bis zu 20 Kohlenstoffatomen, wie beispielsweise 2,2-Dimethylolessigsäure, 2,2-Dimetylolpentansäure oder ganz besonders bevorzugt 2,2-Dimethylolpropionsäure. Der Anteil der carboxylgruppenhaltigen Monomeren an der Gesamtheit der Polyolbausteine (b11) wird solchermaßen gewählt, daß die Säurezahl der Polyurethan-Alkydharz-Komponente (A) vorzugsweise zwischen 15 und 40 mg KOH/g, besonders bevorzugt zwischen 20 und 30 mg KOH/g liegt.

Als Säurebausteine (b12) werden vorzugsweise aliphatische, cycloaliphatische gesättigte oder ungesättigte und/oder aromatische mehrbasische Carbonsäuren, besonders vorzugsweise Di-, Tri- und Tetracarbonsäure, sowie deren Anhydride und/oder deren Ester eingesetzt. Beispielhaft für (b12) seien genannt: Phthalsäure(anhydrid), Isophthalsäure, Terephthalsäure, Tetrahydro- oder Hexahydrophthalsäure(anhydrid), Endomethylentetrahydrophthalsäure, Bernsteinsäure, Glutarsäure, Sebacinsäure, Azelainsäure, Trimellithsäure,
Trimellithsäureanhydrid, Pyromellithsäure(anhydrid), Fumar- und Maleinsäure. Am gebräuchlichsten werden als Bausteine (b12) Isophthalsäure und Phthalsäure(anhydrid) eingesetzt.

Als Polyisocyanate (b2) bevorzugt sind solche, die 4 bis 25 Kohlenstoffatome und 2 bis 4 Isocyanatgruppen pro Molekül aufweisen.Besonders bevorzugt sind aliphatische, cycloaliphatische, araliphatische oder aromatische Diisocyanate (b2), wie beispielsweise: 1,2-Ethylendiisocyanat, 1,4-Tetramethylendiisocyanat, 1,6-Hexamethylendiisocyanat, 2,2,4-bzw. 2,4,4-Trimethyl-1,6-hexamethylendiisocyanat, 1,12-Dodecandiisocyanat, Cyclobutan-1,3-diisocyanat, Cyclohexan-1,3- und -1,4-diisocyanat, 2,2- und 2,6-Diisocyanato-1-methylcyclohexan, 3-Isocyanatomethyl-3,5,5-trimethylcyclohexylisocyanat (Isophorondiisocyanat),2,5- und 3,5-Bis(isocyanatomethyl)-8-methyl-1,4,-methano-decahydronaphthalin, 2,6-Bis-(isocyanato) -4,7-methano-hexahydroindan, Dicyclohexyl-2,4'- und -4,4'-diisocyanat, 2,4-und 2,6-Hexahydrotoluylendiisocyanat, Perhydro-2,4'- und -4,4'-diphenylmethandiisocyanat, 1,3- und 1,4-Phenylendiisocyanat, 4,4'-Diisocyanatodiphenyl, 4,4'-Diisocyanato-3,3'-dimethoxydiphenyl, 4,4'-Diisocyanato-3,3'-dimethyldiphenyl, 4,4'-Diisocyanato-3,3'-Dipenyldiphenyl, 2,4'- und 4,4'-Disocyanatodiphenylmethan, Naphthylen-1,5-diisocyanat, Toluylendiisocyanat, wie 2,4- bzw. 2,6-Toluylendiisocyanat, N,N'-(4,4'-Dimethyl-3,3'-diisocyanatodiphenyl)uretdion, m-Xylylendiisocyanat, Tetramethylxylylendiisocyanat oder Triisocyanate, wie 2,4,4'-Triisocyanatodiphenylether, 4,4',4"-Triisocyanatotriphenylmethan, Tris(4-isocyanatophenyl)thiophosphat.Besonders bevorzugt werden im allgemeinen als Bausteine (b2) die technisch leicht zugänglichen aliphatischen oder cycloaliphatischen Polyisocyanate, wie insbesondere Hexamethylendiisocyanat, 4,4'-Di(isocyanatocyclohexyl)methan und Isophorondiisocyanat sowie das araliphatische Tetramethylxylylendiisocyanat.

Bevorzugt werden die Polyurethan-Alkydharze (A) in einem zwei- oder mehrstufigen Verfahren hergestellt, das zunächst die Synthese der Polyesterpolyol-Komponente (b1), enthaltend die ungesättigten Fettsäuren (a1) und (a2) als Monomerbausteine umfaßt, wobei hernach (b1) in einem weiteren Verfahrensschritt mit dem Polyisocyanat (b2) zur Polyurethan-Alkydharz-Komponente umgesetzt wird.
Die Herstellung der Komponente (b1), die auch als hydroxyfunktionelles Alkydharz bezeichnet werden kann, wird in Gegenwart von 0,01 bis 2,5 Gew.-%, bezogen auf die Alkydharz-Komponente (b1), an Katalysatoren, wie vorzugsweise Dialkyl- oder Dialkoxyzinnoxiden, unter azeotroper Abdestillation des Reaktionswassers solchermaßen durchgeführt, daß das Alkydharz (b1) eine Säurezahl von bevorzugt weniger als 10 mg KOH/g, besonders bevorzugt von weniger als 5 mg KOH/g aufweist.
Die solchermaßen hergestellte Komponente (b1) wird in einem weiteren Verfahrensschritt mit dem Polyisocyanat (b2) in solchen Gewichtsverhältnissen umgesetzt, daß das resultierende Polyurethan-Alkydharz (A) einen Gehalt an Urethangruppen von vorzugsweise zwischen 5 und 15 Gew.-% bezogen auf (A), besonders vorzugsweise zwischen 5 und 10 Gew.-%, aufweist. Die Umsetzung wird vorzugsweise solange durchgeführt bis kein freies Isocyanat mehr nachweisbar ist. Die Säurezahl des Polyurethan-Alkydharzes (A) beträgt vorzugsweise zwischen 15 und 40 mg KOH/g, besonders vorzugsweise zwischen 20 und 30 mg KOH/g, während die Hydroxylgruppenzahl vorzugsweise zwischen 90 und 150 mg KOH/g, besonders vorzugsweise zwischen 100 und 130 mg KOH/g liegt.
Bevorzugt werden die Polyisocyanate (b2) in einem vorgeschalteten Reaktionsschritt mit Hydroxycarbonsäuren, wie sie beispielsweise in der oben angeführten Aufzählung der für die Synthese des hydroxyfunktionellen Alkydharzes (b1) enthalten sind, umgesetzt. Dies dient vorzugsweise der Steuerung der Säurezahl im Polyurethan-Alkydharz (A).

Die zahlenmittleren Molekulargewichte Mn (bestimmt per Gelpermeationschromatographie) der Polyurethan-Alkydharze (A) liegt im allgemeinen zwischen 1000 und 100000, bevorzugt zwischen 2000 und 50000, besonders bevorzugt zwischen 2000 und 20000 Dalton.

Grundsätzlich kann die Herstellung des Polyurethan-Alkydharzes (A) in Stufe (I) in Masse oder in Lösung durchgeführt werden.
Die für die Herstellung des Polyurethan-Alkydharzes (A) verwendeten Lösemittel sind bevorzugt gegen Isocyanat inert und wasserverdünnbar, wie beispielsweise Ketone, Ester oder Ether, wie z.B. Aceton, N-Methylpyrrolidon, Dipropylenglykoldimethylether, Ethylethoxypropionat oder besonders bevorzugt Methylethylketon.
Gegebenenfalls können auch gegen Isocyanat nicht inerte aber wasserverdünnbare Lösemittel eingesetzt werden, wie beispielsweise monofunktionelle Alkohole, wie z.B. Butanol, n-Propanol, Isopropanol; Etheralkohole, wie z.B. Butoxyethanol, Methoxypropanol, Ethoxypropanol, Butoxypropanol; Dialkohole, wie z.B. Ethylenglykol; Trialkohole, wie z.B. Glycerin.
Bei der Verwendung von Alkoholen als Lösemittel ist zu beachten, daß diese als Reaktionspartner bei der Herstellung der Komponenten (b1) und bei der anschließenden Umsetzung von (b1) mit (b2) zu (A) auftreten können.
Ebenso können gegen Isocyanat inerte und nicht oder nur wenig wasserverdünnbare Lösemittel, wie Ether, Ester Ether-Ester oder Ketone eingesetzt werden.

### Die Stufe (II) des erfindungsgemäßen Verfahrens: die Neutralisation des Polyurethan-Akydharzes (A) und dessen Überführung in die wäßrige Dispersion oder Lösung

Im der Stufe (II) des erfindungsgemäßen Verfahrens werden die Säuregruppen des gelösten Polyurethan-Alkydharzes (A) teilweise oder vollständig neutralisiert: vorzugsweise mit Ammoniak und/oder organischem Amin, wie beispielsweise Triethylamin, N-Methylmorpholin oder Aminoalkohole, wie Dimethylisopropanolamin, 2-Amino-2-methylpropanol-1 oder vorzugsweise Dimethylethanolamin.

Zur Herstellung der wäßrigen Dispersion oder Lösung gemäß Stufe (II) wird das Polyurethan-Alkydharz (A) nach vorangegangener teilweiser oder vollständiger Neutralisation der Säuregruppen und gegebenenfalls nach Zugabe von geringen Mengen organischer Hilfslösemittel mit Wasser in eine wäßrige Dispersion oder Lösung mit einem Festkörpergehalt von bevorzugt zwischen 35 und 45 Gew.-%, besonders bevorzugt zwischen 37 und 42 Gew.-% Polyurethan-Alkydharz, bezogen auf die wäßrige Dispersion, überführt.

### Die Stufe (III) des erfindungsgemäßen Verfahrens: die Herstellung der wäßrigen Bindemitteldispersion BM enthaltend das acrylatmodifizierte Polyurethan-Alkydharz (A')

Als Monomere (c) für die Herstellung der wäßrigen Bindemitteldispersion werden im wesentlichen ethylenisch ungesättigte Verbindungen verwendet, welche im wesentlichen neben der C-C-Doppelbindung keine weitere reaktionsfähige Gruppe tragen.
Bevorzugt als Monomere (c) werden Acrylsäure- und/oder Methacrylsäureester von C1- bis C12-Alkoholen, wie beispielsweise Ethyl(meth)acrylat, Propyl(meth)acrylat, Isopropyl(meth)acrylat, Isobutyl(meth)acrylat, tert.-Butyl(meth)acrylat, Amyl(meth)acrylat, Hexyl(meth)acrylat, Octyl(meth)acrylat, Decyl(meth)acrylat, Dodecyl(meth)acrylat, sowie vorzugsweise Methyl(meth)acrylat, Butyl(meth)acrylat und 2-Ethylhexyl(meth)acrylat, aromatische Vinylverbindungen, wie beispielsweise alpha-Methylstyrol, Vinyltoluol oder bevorzugt Styrol, sowie Vinylester, wie beispielsweise Vinylacetat oder Vinylpropionat, oder Mischungen aus den genannten Monomeren. In untergeordneten Mengen, beispielsweise bis zu 5 Gew.-%, bezogen auf die Gesamtmenge an Monomeren (c), können noch Monomere mit funktionellen Gruppen, insbesondere hydroxylgruppenhaltige Monomere, wie beispielsweise 2-Hydroxyethyl(meth)acrylat, mitverwendet werden.
Zur Herstellung der erfindungsgemäßen wäßrigen Bindemitteldispersion wird die in Stufe (II) hergestellte wäßrige Dispersion oder Lösung des Polyurethan-Alkydharzes (A) vorgelegt, auf eine Temperatur zwischen 50 und 100 Grad C, vorzugsweise zwischen 60 und 90 Grad C, erwärmt und das Monomere oder Monomerengemisch (c) gemeinsam mit einem radikalbildenden Polymerisationsinitiator, wie beispielsweise Azoverbindungen sowie anorganische oder organische Peroxide, sowie gegebenenfalls weiteren Hilfsmitteln, wie beispielsweise Emulgatoren oder Hilfslösemittel, wie Alkohole oder Glykolether, unter Rühren während einer Zeit von 0,5 bis 8 Stunden, vorzugsweise von 0,75 bis 4 Stunden zudosiert. Nach Ende der Zugabe des Monomeren oder Monomerengemischs (c) wird die Temperatur im Reaktor noch etwa 2 bis 8 Stunden auf Reaktionstemperatur gehalten, um einen möglichst vollständigen Umsatz des Monomeren oder Monomerengemischs (c) zu erzielen.

Die resultierenden wäßrigen Bindemitteldispersionen BM enthalten weniger als 5 Gew.-%, vorzusweise weniger als 2 Gew.-% und besonders vorzugsweise weniger als 1 Gew.-% Lösemittel.

Die resultierende erfindungsgemäße Bindemitteldispersion BM enthält das acrylatmodifizierte Polyurethan-Alkydharz (A') in einem Gehalt von 20 bis 75 Gew.-%, vorzugsweise von 25 bis 65 Gew.-%, besonders vorzugsweise von 30 bis 60 Gew.-%, als Festkörper.

### Die Formulierung von Lacken, enthaltend die nach dem erfindungsgemäßen Verfahren hergestellte wäßrige Bindemitteldispersion BM

Bis zu einem Anteil von 25 Gew.-%, bevorzugt bis 15 Gew.-%, bezogen auf den Festkörper der waßrigen Bindmitteldispersion BM, können Lacke auf der Basis von BM weitere Bindemittelharze enthalten, wie beispielsweise (Meth)acrylcopolymere, Polyesterharze und/oder vom acrylatmodifizierten Polyurethan-Alkydharz (A') verschiedene Polyurethanharze.

Neben der erfindungsgemäßen Bindemitteldispersion BM kann der Lack mindestens ein anorganisches und/oder organisches Farb- oder Effektpigment und gegebenfalls zusätzlich einen Füllstoff enthalten.
Beispiele für farbgebende Pigmente oder Füllstoffe sind: Titandioxid, Eisenoxidpigmente, Ruße, Siliciumdioxid, Aluminiumsilikat, Korrosionsschutzpigmente, wie Blei- und Chromatverbindungen, Bariumsulfat, Glimmer, Talkum, Kaolin, Kreide, Azofarbstoff-Pigmente, Phthalocyaninfarbstoff-Pigmente oder Ultramarinblau.
Beispiele für Effektpigmente sind: Metallpigmente, beispielsweise aus Aluminium, Kupfer oder anderen Metallen, Interferenzpigmente, wie beispielsweise metalloxidbeschichtete Metallpigmente, beschichtete Glimmer, wie beispielsweise titanoxidbeschichteter Glimmer, und Graphiteffektpigmente.
Die Pigmente werden im allgemeinen im Form einer Paste eingesetzt, die beispielsweise handelsüblich ist oder die vorzugsweise durch Kombination von einem Teil des Bindemittelharzes, Wasser, Netzmittel und Pigment, gegebenenfalls gemeinsam mit einem Füllstoff, formuliert wird und in einem dem Fachmann geläufigen Aggregat, beispielsweise einer Perlmühle, angerieben und auf eine bestimmte Pigmentteilchengröße, vorzugsweise zwischen 10 und 15 Mikrometer eingestellt wird. Dabei muß beachtet werden, daß während des Mahlprozesses die Stabilität der wäßrigen Dispersion erhalten bleibt. Gegebenenfalls können hierfür weitere Dispergierhilfsmittel zugesetzt werden.
Das Gewichtsverhältnis von Pigment zu Bindemittel liegt im allgemeinen zwischen 0,01:1 und 4:1, vorzugsweise zwischen 0,3:1 und 1:1.

Weiterhin enthält der Lack im allgemeinen rheologiesteuernde Mittel, wie beispielsweise Polymermikrcteilchen, anorganische Schichtsilikate, z.B. Aluminium-Magnesium-Schichtsilikate, Natrium-Magnesium-Schichtsilikate und Natrium-Magnesium-Fluorlithium-Schichtsilikate des Montmorillonittyps, sowie Assoziativverdicker, wie z.B. auf Polyurethan- oder Cellulosebasis, Polyvinylalkohol, Poly(meth)acrylamid oder Polymere mit ionischen Gruppen, wie z.B. Poly(meth)acrylsäure.

In untergeordneten Anteilen von bis zu 20 Gew.-%, vorzugsweise von bis zu 10 Gew.-% bezogen auf das Bindemittel (A') können die erfindungsgemäßen Lackformulierungen Komponenten (B) enthalten, die die Bindemittel bei den Applikationstemperaturen chemisch, das heißt unter Ausbildung kovalenter Bindungen, vernetzen. Vorzugsweise reagieren die Komponenten (B) mit den freien Hydroxylgruppen des acrylatmodifizierten Polyurethan-Alkydharzes (A') unter Ausbildungen eines dreidimensionalen Netzwerks. Beispiele für solche Vernetzungskomponenten (B) sind: Polyisocyanate, wie sie als Komponente (b2) des Polyurethan-Alkydharzes (A) angeführt sind, oder Polyepoxide.

Die erfindungsgemäßen Lackformulierungen werden mittels der an sich üblichen Techniken, wie beispielsweise Tauchen, Rakeln, Rollen oder Spritzen auf die zu beschichtenden Substrate aufgetragen, wobei der sich bildende Film vernetzt. Die Vernetzung erfolgt bei Temperaturen zwischen 0 und 100 Grad C, vorzugsweise zwischen 10 und 60 Grad C, besonders vorzusweise zwischen 15 und 40 Grad C (Raumtemperaturverhältnisse). Die Schichtdicken der applizierten erfindungsgemäßen Lacke richten sich nach der Anwendung und nach der Lackformulierung. Beipielsweise weisen Klarlacküberzüge Schichtdicken zwischen 40 und 100 Mikrometer, pigmentierte Basis- oder Decklacküberzüge Schichtdicken zwischen 50 und 120 Mikrometer, Überzüge als Füller oder Schutz gegen mechanische Stoßbeanspruchung Schichtdicken zwischen 70 und 160 Mikrometer sowie Grundierungen Schichtdicken zwischen 50 und 110 Mikrometer auf.

Als Substrate für die erfindungsgemäßen Lackformulierungen sind beliebige Untergründe geeignet, beispielsweise Metallsubstrate, wie Eisen, Stähle, Aluminium oder Zink. Als geeignete nicht-metallische Substrate seien mineralische Substrate, wie beispielsweise Beton, Putze oder Glas, Holz oder Kunststoffe, wie beispielsweise Polyolefine, Polyurethane, Polystyrol, Polycarbonat, Poly(meth)acrylate oder Polyvinylchlorid genannt. Gegebenenfalls können die Substrate Vorbeschichtungen aufweisen.
Die erfindungsgemäßen Lackformulierungen können für sich alleine oder gemeinsam mit anderen Beschichtungsmittel in einer oder mehreren Stufen aufgetragen werden. Bei der Lackapplikation kann auf getrocknetes beschichtetes oder auf ein feuchtes beschichtetes Substrat aufgetragen werden, wobei bei letzterer Technik eine kureze Ablüftphase zwischengeschaltet werden kann. Bei dem mehrstufigen Beschichtungsverfahren kann der erfindungsgemäße Lack für sich alleine in mehreren Stufen aufgetragen werden, wobei das in der Vorstufe hergestellte beschichtete Substrat trocken oder feucht sein kann.

Die folgenden Beispiele sollen die Erfindung weiter veranschaulichen.

### Beispiele

### Beispiel 1: Herstellung des Polyurethan-Alkydharzes (A) gemäß Stufe (I) des erfindungsgemäßen Verfahrens

80 g Neopentylglykol, 647 g Trimethylolpropan, 331 g Isophthalsäure, 308 g Hexahydrophthalsäureanhydrid, 792 g einer Mischung aus handelsüblicher Linolsäure und C18-Fettsäure mit konjugierten Doppelbindungen, wobei die Linolsäure einen Anteil von 75 Gew.-% und die C18-Fettsäure mit konjugierten Doppelbindungen den zu 100 Gew.-% ergänzenden Anteil in der Mischung ausmachen, werden in einem Reaktor in Gegenwart von 0,48 g Dibutylzinnoxid als Katalysator sowie 40 g Xylol als Schleppmittel so lange unter azeotroper Abdestillation des Reaktionsprodukts Wasser erhitzt, bis eine Säurezahl von 4 mg KOH/g erreicht ist. Nach dem Abkühlen wird das Polyesterpolyol (b1), enthaltend die ungesättigten Fettsäuren (a1) und (a2), in 212 g Methylethylketon gelöst.

Zur Herstellung des Polyisocyanats (b2) werden 303 g Tetramethylxylylendiisocyanat und 83 g Dimethylolpropionsäure in einem geeigneten Reaktionsgefäß in 809 g Methylethylketon so lange auf 80 bis 82 Grad C erhitzt, bis der NCO-Gehalt des Präaddukts (b2) 4,4% beträgt.

Danach wird zur Herstellung des Polyurethan-Alkydharzes (A) die Lösung des Polyisocyanats (b2) auf 50 Grad C abgekühlt,mit 1285 g des Polyesterpolyols (b1) versetzt und bei 80 Grad C so lange umgesetzt, bis kein freies Isocyanat mehr nachweisbar ist.

### Beispiel 2: Die Neutralisation des Polyurethan-Alkydharzes (A) und dessen Überführung in die wäßrige Dispersion gemäß Stufe II des erfindungsgemäßen Verfahrens

Zur Neutralisation wird dem Reaktionsgemisch gemäß Beispiel 1, enthaltend das Polyurethan-Alkydharz (A), 44 g Dimethylaminoethanol zugesetzt und in 1050 g deionisiertem Wasser dispergiert. Anschließend wird das Methylethylketon bis auf einen Restanteil von 0.78 Gew.-%, bezogen auf das Endprodukt, durch azeotrope Destillation entfernt und die Dispersion mit deionisiertem Wasser auf einen Gehalt an Polyurethan-Alkydharz (A) von 40 Gew.-% eingestellt.

### Beispiel 3: Herstellung der wäßrigen Bindemitteldispersion BM enthaltend das acrylatmodifizierte Polyurethan-Alkydharz (A') gemäß Stufe (III) des erfindungsgemäßen Verfahrens

In einem für die radikalische Reaktion geeigneten Reaktor mit Rührer, Kühler, Thermometer und Zulaufgefäß werden 222,75 g der gemäß Beispiel 2 hergestellten Dispersion des Polyurethan-Alkydharzes (A) eingewogen und auf 80 Grad C erhitzt. Während 1 Stunde wird unter Rühren ein Gemisch aus 4,95 g n-Butylmethacrylat, 2,475 g Methylmethacrylat und 2,375 g Styrol unter schnellen Rühren zudosiert. Gleichzeitig wird 1 g tert.-Butylperoxyethylhexanoat in einem separaten Zulauf ebenfalls während 1 Stunde zudosiert. Nach Ende der Zudosierung wird noch 8 Stunden bei 80 Grad C zur Nachreaktion gerührt. Es resultiert die wäßrige Bindemitteldispersion BM des acrylatmodifizierten Polyurethan-Alkydharzes (A').

### Beispiel 4: Herstellung einer Pigment-Weißpaste

18 g der Bindemitteldispersion BM gemäß Beispiel 3 werden nach Zugabe 6 g deionisiertem Wasser und 8,9 g eines handelsüblichen Dispergiermittels auf Basis anionischer und nichtionischer Bestandteile (Disperse Ayd W22® der Firma Krahn Chemie GmbH) mit 60 g Titandioxid-Pigment(Rutil-Typ R-HD2® der Firma Tioxide) vermischt. Diese Mischung wird mit deionisiertem Wasser auf einen Feststoffgehalt von 70 % eingestellt und in einer Perlmühle auf einen Pigmentteilchen-Durchmesser von 10 bis 15 Mikrometer ausdispergiert.

### Beispiel 5: Herstellung eines weißen wasserverdünnbaren Hochglanzlacks

In 64 g der Bindemitteldispersion BM gemäß Beispiel 3 werden 1,8 g Sikkativmischung, bestehend aus Strontiumoctoat, Cobaltoctoat und Calciumoctoat (50 Gew.-% Feststoffgehalt, Siccatol® 938 der Firma AKZO), dispergiert. Danach werden 21 g der Pigment-Weißpaste gemäß Beispiel 4, 4 g Butylglykol, 0,5 g eines handelsüblichen Verdickers (Polyurethan-Basis, 25 Gew.-% Festkörperanteil, Rheolate® 278 der Firma Kronos Titan GmbH) sowie 0,3 g eines handelsüblichen Entschäumers (Polysiloxan-Basis, Byk® 024 der Firma Byk Chemie) unter Rühren zugegeben. Hiernach werden 5 g einer nichtionischen Wachsemulsion (Aquacer® 535 der Firma Byk-Cera Chemie B.V.)und eine aufgeschlossene Mischung aus 0,3 g eines rheologischen Additivs (Bentone® LT der Firma Kronos Titan GmbH) und 3,3 g deionsiertem Wasser unter Rühren zugegeben. Mit deionisiertem Wasser wird anschließend eine Applikationsviskosität von 950 bis 1050 mPas eingestellt.

Beschichtungen, die mit dem Lack gemäß Beispiel 5 hergestellt werden, sind in hohem Maße vergilbungsarm, witterungsstabil, kratzfest und hochglänzend, sowie in hohem Maße beständig gegen Wasser und Alkohol.

## Patentansprüche

1. Mehrstufiges Verfahren zur Herstellung einer wäßrigen Bindemittelmitteldispersion, enthaltend ein acrylatmodifiziertes Polyurethan-Alkydharz (A'), umfassend folgende aufeinanderfolgende Stufen:
(I) Herstellung eines Polyurethan-Alkydharzes (A), aufgebaut aus:
(a) 5 bis 50 Gew.-% eines Gemischs aus:
(a1) 90 bis 30 Gew.-Teilen einer ungesättigten C6- bis C30-Fettsäure mit mindestens zwei nicht-konjugierten Doppelbindungen, sowie
(a2) 10 bis 70 Gew.-Teilen einer ungesättigten C6- bis C30-Fettsäure mit mindestens zwei konjugierten Doppelbindungen,
als veresterte Polymerseitenketten der Polyurethan-Alkydharz-Komponente (A),
sowie
(b) 95 bis 50 Gew.-% Polyurethan-Einheiten mit Monomerbausteinen mit anionischen Gruppen und/oder durch Neutralisation in anionische Gruppen überführbare Gruppen als Polymerhauptketten der Polyurethan-Alkydharzkomponente (A),
(II) Neutralisation der in anionische Gruppen überführbare Gruppen der Polyurethan-Alkydharzkomponente (A) und deren Überführung in die wäßrige Dispersion oder Lösung, sowie
(III) die Herstellung der Bindemitteldispersion BM, enthaltend das acrylatmodifizierte Polyurethan-Alkydharz (A') durch Polymerisation von mindestens einem ethylenisch ungesättigen, radikalisch polymerisierbaren Monomeren (c), das im wesentlichen außer der C-C-Doppelbindung keine weitere reaktionsfähige funktionellen Gruppen aufweist, in der gemäß Stufe (II) hergestellten Dispersion oder Lösung in Gegenwart eines Radikalbildners als Polymerisationsinitiator.

2. Verfahren gemäß Anspruch 1,
dadurch gekennzeichnet,
daß die Komponente(a) im Polyurethan-Alkydharz (A) aufgebaut ist aus 80 bis 50 Gew.-% der Komponente (a1) und 20 bis 50 Gew.-% der Komponente (a2).

3. Verfahren gemäß den Ansprüchen 1 oder 2,
dadurch gekennzeichnet,
daß im Polyurethan-Alkydharz (A) die Komponente (a1) Linolsäure und die Komponente (a2) eine C18-Konjuen-Fettsäure ist.

4. Verfahren nach einem der Ansprüche 1 bis 3,
dadurch gekennzeichnet,
daß im Polyurethan-Alkydharz (A) die Polyurethaneinheiten (b) aufgebaut sind aus:
(b1) Polyesterpolyolen und
(b2) Polyisocyanaten.

5. Verfahren nach Anspruch 4,
dadurch gekennzeichnet,
daß im Polyurethan-Alkydharz (A) die Polyesterpolyole
(b1) aufgebaut sind aus:
(b11) aliphatischen, cycloaliphatischen und/oder araliphatischen Alkoholen mit 1 bis 6 an nicht-aromatische Kohlenstoffatome gebundenen Hydroxylgruppen pro Molekül, sowie
(b12) aliphatischen, cycloaliphatischen gesättigten und/oder ungesättigten und/oder aromatischen mehrbasischen Carbonsäuren, deren Anhydride und/oder deren Ester.

6. Verfahren nach einem der Ansprüche 1 bis 5,
dadurch gekennzeichnet,
daß das Polyurethan-Alkydharz (A) Säurezahlen zwischen 15 und 40 mg KOH/g und Hyroxylzahlen zwischen 90 und 150 mg KOH/g aufweist.

7. Verfahren nach einem der Ansprüche 1 bis 6,
dadurch gekennzeichnet,
daß das Polyurethan-Alkydharz (A) einen Gehalt an Urethangruppen zwischen 5 und 15 Gew.-% bezogen auf (A) aufweist.

8. Verfahren nach einem der Ansprüche 1 bis 7,
dadurch gekennzeichnet,
das Monomere (c) ausgewählt ist aus der Gruppe (Meth)acrylsäureester, Vinylaromaten und Vinylester.

9. Verfahren nach einem der Ansprüche 1 bis 8,
dadurch gekennzeichnet,
daß die wäßrige Bindemitteldispersion BM des acrylatmodifizierten Polyurethan-Alkydharzes (A') einen Gehalt an organischen Lösemitteln von weniger als 2 Gew.-% bezogen auf (A') aufweist.

10. Lack, enthaltend eine nach dem Verfahren nach einem der Ansprüche 1 bis 9 hergestellte wäßrige Bindemitteldispersion BM.

11. Lack nach Anspruch 10,
dadurch gekennzeichnet,
daß zusätzlich zum in der wäßrigen Bindemitteldispersion BM enthaltenen acrylatmodifizierten Polyurethan-Alkydharz (A') bis zu 25 Gew.-%, bezogen auf (A'), von (A') verschiedene Harze in der Bindemitteldispersion BM anwesend sind

12. Lack nach Anspruch 10 oder 11,
dadurch gekennzeichnet,
daß bis zu 20 Gew.-%, bezogen auf (A'), einer Vernetzerkomponente (B), in der Bindemitteldispersion anwesend ist, welche bei Temperaturen unter 60 Grad C mit den überschüssigen Hydroxyl- und/oder Carboxylgruppen der Polyurethan-Alkydharzkomponente reagieren kann.

13. Verwendung des Lacks nach einem der Ansprüche 10 bis 12 zur Beschichtung von mineralischen Substraten, Metall-, Holz- und Kunststoffsubstraten

14. Verwendung des Lacks nach einem der Ansprüche 10 bis 12 zur Beschichtung von bereits beschichteten Substraten.

## Claims

1. Multistage process for preparing an aqueous binder dispersion comprising an acrylate-modified polyurethane-alkyd resin (A'), comprising the following successive stages:
(I) preparation of a polyurethane-alkyd resin (A) composed of:
(a) from 5 to 50% by weight of a mixture comprising:
(a1) from 90 to 30 parts by weight of an unsaturated C6 to C30 fatty acid having at least two nonconjugated double bonds, and
(a2) from 10 to 70 parts by weight of an unsaturated C6 to C30 fatty acid having at least two conjugated double bonds,
as esterified polymer side chains of the polyurethane-alkyd resin component (A),
and
(b) from 95 to 50% by weight of polyurethane units with monomer building blocks having anionic groups and/or groups which can be converted by neutralization into anionic groups, as polymer main chains of the polyurethane-alkyd resin component (A),
(II) neutralization of the groups which can be converted into anionic groups of the polyurethane-alkyd resin component (A) and its conversion into the aqueous dispersion or solution, and
(III) the preparation of the binder dispersion BM, comprising the acrylate-modified polyurethane alkyd resin (A'), by polymerizing at least one ethylenically unsaturated, free-radically polymerizable monomer (c) which has essentially no reactive functional groups other than the C-C double bond, in the dispersion or solution prepared in accordance with stage (II) in the presence of a free-radical polymerization initiator.

2. Process according to Claim 1,
characterized
in that the component (a) in the polyurethane-alkyd resin (A) is composed of from 80 to 50% by weight of component (a1) and from 20 to 50% by weight of component (a2).

3. Process according to Claims 1 or 2,
characterized
in that in the polyurethane-alkyd resin (A) the component (a1) is linoleic acid and the component (a2) is a C18 conjuene fatty acid.

4. Process according to one of Claims 1 to 3,
characterized
in that in the polyurethane-alkyd resin (A) the polyurethane units (b) are composed of:
(b1) polyesterpolyols and
(b2) polyisocyanates.

5. Process according to Claim 4,
characterized
in that in the polyurethane-alkyd resin (A) the polyesterpolyols (b1) are composed of:
(b11) aliphatic, cycloaliphatic and/or araliphatic alcohols having per molecule 1 to 6 hydroxyl groups attached to nonaromatic carbon atoms, and
(b12) aliphatic, cycloaliphatic saturated and/or unsaturated and/or aromatic polybasic carboxylic acids, their anhydrides and/or their esters.

6. Process according to one of Claims 1 to 5,
characterized
in that the polyurethane-alkyd resin (A) has acid numbers of between 15 and 40 mg of KOH/g and hyroxyl [sic] numbers of between 90 and 150 mg of KOH/g.

7. Process according to one of Claims 1 to 6,
characterized
in that the polyurethane-alkyd resin (A) has a content of urethane groups of between 5 and 15% by weight based on (A).

8. Process according to one of Claims 1 to 7,
characterized
[lacuna] the monomer (c) is selected from the group (meth)acrylic esters, vinylaromatic compounds and vinyl esters.

9. Process according to one of Claims 1 to 8,
characterized
in that the aqueous binder dispersion BM of the acrylate-modified polyurethane-alkyd resin (A') has a content of organic solvents of less than 2% by weight based on (A').

10. Coating material comprising an aqueous binder dispersion BM prepared by the process according to one of Claims 1 to 9.

11. Coating material according to Claim 10,
characterized
in that, in addition to the acrylate-modified polyurethane-alkyd resin (A') present in the aqueous binder dispersion BM up to 25% by weight, based on (A'), of resins other than (A') are present in the binder dispersion BM.

12. Coating material according to Claim 10 or 11,
characterized
in that up to 20% by weight, based on (A'), of a crosslinker component (B) is present in the binder dispersion, which is able to react at temperatures below 60 degrees C with the excess hydroxyl and/or carboxyl groups of the polyurethane-alkyd resin component.

13. Use of the coating material according to one of Claims 10 to 12 for coating mineral, metal, wood and plastic substrates.

14. Use of the coating material according to one of Claims 10 to 12 for coating already coated substrates.

## Revendications

1. Procédé à plusieurs étapes pour la préparation d'une dispersion de liant aqueuse contenant une résine alkyde-polyuréthane (A') acrylate-modifiée, comprenant les étapes successives suivantes :
(I) la préparation d'une résine alkyde-polyuréthane (A) composée de :
(a)de 5 à 50% en poids d'un mélange de :
(a1) de 90 à 30 parties en poids d'un acide gras en C6 à C30 insaturé ayant au moins deux doubles liaisons non conjuguées et
(a2) de 10 à 70 parties en poids d'un acide gras en C6 à C30 insaturé ayant au moins deux doubles liaisons conjuguées,
en tant que chaînes latérales polymères estérifiées du composant résine alkyde-polyuréthane (A),
et
(b) de 95 à 50% en poids de motifs polyuréthane avec des éléments structuraux monomères ayant des groupes anioniques et/ou des groupes pouvant être transformés en groupes anioniques par neutralisation, en tant que chaînes principales polymères du composant résine alkyde-polyuréthane (A),
(II) la neutralisation des groupes pouvant être transformés en groupes anioniques, du composant résine alkyde-polyuréthane (A) et son passage en dispersion ou solution aqueuse, et
(III) la préparation de la dispersion de liant BM contenant la résine alkyde-polyuréthane (A') acrylate-modifiée par polymérisation d'au moins un monomère (c) éthyléniquement insaturé et polymérisable par voie radicalaire qui ne renferme, en plus de la double liaison C-C, essentiellement aucun autre groupe fonctionnel réactif, dans la dispersion ou solution préparée conformément à l'étape (II) en présence d'un agent générant des radicaux en tant qu'amorceur de polymérisation.

2. Procédé selon la revendication 1, caractérisé en ce que le composant (a) dans la résine alkyde-polyuréthane (A) est composé de 80 à 50% en poids du composant (a1) et de 20 à 50% en poids du composant (a2).

3. Procédé selon les revendications 1 ou 2, caractérisé en ce que dans la résine alkyde-polyuréthane (A), le composant (a1) est l'acide linoléique et le composant (a2) est un acide gras en C18 à ène conjugué.

4. Procédé selon l'une quelconque des revendications 1 à 3, caractérisé en ce que dans la résine alkyde-polyuréthane (A), les motifs polyuréthane (b) sont composés de :
(b1) des polyester-polyols et
(b2) des polyisocyanates.

5. Procédé selon la revendication 4, caractérisé en ce que dans la résine alkyde-polyuréthane (A), les polyester-polyols (b1) sont composés de :
(b11) des alcools aliphatiques, cycloaliphatiques et/ou araliphatiques ayant de 1 à 6 groupes hydroxy liés à des atomes de carbone non aromatiques par molécule, et
(b12) des acides carboxyliques polybasiques aliphatiques, cycloaliphatiques saturés et/ou insaturés et/ou aromatiques, leurs anhydrides et/ou leurs esters.

6. Procédé selon l'une quelconque des revendications 1 à 5, caractérisé en ce que la résine alkyde-polyuréthane (A) présente des indices d'acide compris entre 15 et 40 mg KOH/g et des indices d'hydroxy compris entre 90 et 150 mg KOH/g.

7. Procédé selon l'une quelconque des revendications 1 à 6, caractérisé en ce que la résine alkyde-polyuréthane (A) présente une teneur en groupes uréthane comprise entre 5 et 15% en poids, par rapport à (A).

8. Procédé selon l'une quelconque des revendications 1 à 7, caractérisé en ce que le monomère (c) est choisi parmi le groupe constitué d'esters (méth)acryliques, de composés vinylaromatiques et d'esters vinyliques.

9. Procédé selon l'une quelconque des revendications 1 à 8, caractérisé en ce que la dispersion de liant aqueuse BM de la résine alkyde-polyuréthane acrylate-modifiée (A') présente une teneur en solvants organiques inférieure à 2% en poids par rapport à (A').

10. Matériau de revêtement comprenant une dispersion de liant aqueuse BM préparée selon l'une quelconque des revendications 1 à 9.

11. Matériau de revêtement selon la revendication 10, caractérisé en ce qu'en plus de la résine alkyde-polyuréthane acrylate-modifiée (A') présente dans la dispersion de liant aqueuse BM, jusqu'à 25% en poids, par rapport à (A'), de résines différentes de (A') sont présents dans la dispersion de liant BM.

12. Matériau de revêtement selon la revendication 10 ou 11, caractérisé en ce jusqu'à 20% en poids, par rapport à (A'), d'un composant agent de réticulation (B) sont présents dans la dispersion de liant, lequel peut réagir avec les groupes hydroxy et/ou carboxy en excès du composant résine alkyde-polyuréthane à des températures inférieures à 60 degrés C.

13. Utilisation du matériau de revêtement selon l'une quelconque des revendications 10 à 12, pour le revêtement de substrats minéraux, de substrats métalliques, en bois et en plastique.

14. Utilisation du matériau de revêtement selon l'une quelconque des revendications 10 à 12 pour le revêtement de substrats déjà revêtus.
